# EUROPEAN PATENT APPLICATION

(11) **EP 4 664 949 A1**
(43) Date of publication of application: **17.12.2025**
(21) Application number: 23920565.1
(22) Date of filing: 10.02.2023
(51) Int. Cl.: H04W 8/14

(54) **METHOD AND APPARATUS FOR CONTROLLING COMMUNICATION OF USER EQUIPMENT (UE)**

(71) Applicant: Beijing Xiaomi Mobile Software Co., Ltd., Beijing 100085 (CN)
(72) Inventor: MAO, Yuxin, Beijing 100085 (CN)
(74) Representative: Stöckeler, Ferdinand
(86) International application number: PCT/CN2023/075552
(87) International publication number: WO 2024/164358

(57) **Abstract**

The present disclosure relates to the technical field of communications. Provided are a method and apparatus for controlling communication of a user equipment (UE). According to the method for controlling communication of a UE provided in the embodiments of the present disclosure, a first network element may send satellite coverage information to a UE and/or send communication control information to the UE, wherein the satellite coverage information is coverage information of a satellite network in a specified area and is used for setting power-saving parameters and timers related to power-saving management and mobility management, and the communication control information is used for controlling UEs in the same area to perform network communication in a dispersed manner within a preset time range before satellite signal coverage is lost. By means of the present disclosure, a UE can maintain a power-saving state during loss of satellite coverage, and when the UE is about to lose satellite coverage, communication congestion is prevented.

## Description

### FIELD

The present disclosure relates to the field of communication technologies, and in particular relates to a method and an apparatus for controlling a communication of a user equipment (UE).

### BACKGROUND

Since a satellite access network that provides an access service for a user is affected by the insufficient number of satellites or beam coverage, a satellite signal may experience discontinuous coverage behavior. In view of the above scenario, a network or a UE needs to obtain satellite coverage information to sense a period when the UE is within a signal coverage and a period when the UE is outside the signal coverage, determine a behavior of the UE in the period when the UE is outside the signal coverage and a communication before the UE is about to leave a satellite signal coverage, optimize the access and network communication of the UE in the scenario of discontinuous satellite access coverage, and avoid unreasonable resource consumption of the UE and a situation where a large number of users in the same area simultaneously communicate with the network to cause a network congestion when being about to leave the satellite signal coverage.

### SUMMARY

The present disclosure provides a method and an apparatus for controlling a communication of a UE, which may enable the UE to maintain a power saving state during a period when a satellite coverage is left, and avoid communication congestion when being about to leave the satellite coverage.

According to a first aspect of embodiments of the present disclosure, there is provided a method for controlling a communication of a UE, performed by a first network element, including: sending satellite coverage information to the UE and/or sending communication control information to the UE, in which the satellite coverage information is coverage information of a satellite network in a specified area, and is configured to set a power saving parameter and a timer related to a power saving management and a mobility management; and the communication control information is configured to control UEs in the same area to communicate with a network in a distributed manner within a preset time range before leaving a satellite signal coverage.

In some embodiments of the present disclosure, sending the satellite coverage information to the UE includes: sending first satellite coverage information to the UE or sending second satellite coverage information to the UE, in which the first satellite coverage information is satellite coverage information of a satellite network currently used by the UE, or satellite coverage information of at least one available satellite network in the specified area; and the second satellite coverage information is satellite coverage information of the UE at a current location, or satellite coverage information of the UE at a specified location.

In some embodiments of the present disclosure, in response to sending the first satellite coverage information to the UE, the method further includes: obtaining the first satellite coverage information from a second network element.

In some embodiments of the present disclosure, in response to sending the second satellite coverage information to the UE, the method further includes: obtaining the second satellite coverage information from a second network element; or obtaining the first satellite coverage information from a second network element, and generating the second satellite coverage information according to the first satellite coverage information, a location of the UE and/or a moving track of the UE.

In some embodiments of the present disclosure, sending the first satellite coverage information to the UE includes: transparently transmitting the first satellite coverage information to the UE in response to obtaining the first satellite coverage information from the second network element.

In some embodiments of the present disclosure, sending the second satellite coverage information to the UE includes: transparently transmitting the second satellite coverage information to the UE in response to obtaining the second satellite coverage information from the second network element.

In some embodiments of the present disclosure, sending the communication control information to the UE includes: sending time range information to the UE, in which the time range information indicates the UE to randomly communicate with a network within the preset time range before the UE leaves the satellite signal coverage, such that the UEs in the same area communicate with the network in the distributed manner within the preset time range; or sending a first timer to the UE, in which the first timer is set according to second satellite coverage information and is configured to control the UE to communicate with a network at a first timing end moment, and the first timing end moment is within the preset time range before the UE leaves the satellite signal coverage; or sending a communication control indication to the UE, in which the communication control indication is configured to notify the UE using a satellite access with a discontinuous coverage to randomly communicate with a network before leaving the satellite signal coverage.

In some embodiments of the present disclosure, before sending the communication control information to the UE, the method includes: determining to send the communication control information to the UE in response to determining that the discontinuous coverage exists for the satellite access used by the UE or receiving an indication that the UE supports initiating a communication according to the timer.

According to a second aspect of embodiments of the present disclosure, there is provided a method for controlling a communication of a UE, performed by the UE, including: receiving satellite coverage information sent by a first network element and/or receiving communication control information sent by a first network element, in which the satellite coverage information is coverage information of a satellite network in a specified area, and is configured to set a power saving parameter and a timer related to a power saving management and a mobility management; and the communication control information is configured to control UEs in the same area to communicate with a network in a distributed manner within a preset time range before leaving a satellite signal coverage.

In some embodiments of the present disclosure, receiving the satellite coverage information sent by the first network element includes: receiving first satellite coverage information sent by the first network element or receiving second satellite coverage information sent by the first network element, in which the first satellite coverage information is satellite coverage information of a satellite network currently used by the UE, or satellite coverage information of at least one available satellite network in the specified area; and the second satellite coverage information is satellite coverage information of the UE at a current location, or satellite coverage information of the UE at a specified location.

In some embodiments of the present disclosure, in response to receiving the first satellite coverage information sent by the first network element, the method further includes: generating the second satellite coverage information according to the first satellite coverage information, a location of the UE and/or a moving track of the UE; and generating the power saving parameter and a non-access stratum (NAS) timer according to the second satellite coverage information.

In some embodiments of the present disclosure, in response to receiving the second satellite coverage information sent by the first network element, the method further includes: generating the power saving parameter and an NAS timer according to the second satellite coverage information.

In some embodiments of the present disclosure, receiving the communication control information sent by the first network element includes: receiving time range information sent by the first network element, in which the time range information indicates the UE to randomly communicate with a network within the preset time range before the UE leaves the satellite signal coverage, such that the UEs in the same area communicate with the network in the distributed manner within the preset time range; or receiving a first timer sent by the first network element, in which the first timer is set according to the second satellite coverage information and is configured to control the UE to communicate with a network at a first timing end moment, and the first timing end moment is within the preset time range before the UE leaves the satellite signal coverage; or receiving a communication control indication sent by the first network element, in which the communication control indication is configured to notify the UE using a satellite access with a discontinuous coverage to randomly communicate with a network before leaving the satellite signal coverage.

In some embodiments of the present disclosure, in response to receiving the time range information sent by the first network element, the method further includes: setting a second timer according to the time range information and the second satellite coverage information, in which the second timer is configured to control the UE to communicate with the network at a second timing end moment, and the second timing end moment is within the preset time range before the UE leaves the satellite signal coverage; or generating an unreachable period of the UE according to the time range information and the second satellite coverage information, in which the unreachable period is configured to control the UE to communicate with the network before the unreachable period starts, and a start time of the unreachable period of the UE is within the preset time range before the UE leaves the satellite signal coverage.

In some embodiments of the present disclosure, in response to receiving the communication control indication sent by the first network element, the method further includes: setting a second timer according to preset time range information and the second satellite coverage information, in which the second timer is configured to control the UE to communicate with the network at a second timing end moment, and the second timing end moment is within the preset time range before the UE leaves the satellite signal coverage; or generating an unreachable period of the UE according to preset time range information and the second satellite coverage information, in which the unreachable period is configured to control the UE to communicate with the network before the unreachable period starts, and a start time of the unreachable period of the UE is within the preset time range before the UE leaves the satellite signal coverage.

In some embodiments of the present disclosure, the method further includes: activating the first timer or the second timer.

In some embodiments of the present disclosure, the method further includes: communicating with the network at the first timing end moment or the second timing end moment.

In some embodiments of the present disclosure, the method further includes: communicating with the network before the unreachable period starts.

In some embodiments of the present disclosure, communicating with the network at the first timing end moment or the second timing end moment or communicating with the network before the unreachable period starts includes at least one of: sending the power saving parameter and an NAS timer to the first network element; sending the second satellite coverage information to the first network element; or sending unreachable period information of the UE to the first network element.

In some embodiments of the present disclosure, the second satellite coverage information includes at least one of: a time when the UE is within the satellite signal coverage; a duration during which the UE is within the satellite signal coverage; a time when the UE is outside the satellite signal coverage; or a duration during which the UE is outside the satellite signal coverage.

In some embodiments of the present disclosure, the power saving parameter and the NAS timer include at least one of: an extended discontinuous reception (eDRX) parameter in a connection management idle (CM-IDLE) state; a parameter for configuring a mobile initiated connection only (MICO) mode; a parameter for configuring a power saving mode (PSM) state; a timing duration of a periodic registration timer; a timing duration of a mobile reachable timer; or a timing duration of an implicit de-registration timer.

According to a third aspect of embodiments of the present disclosure, there is provided an apparatus for controlling a communication of a UE, performed by a first network element, including: a sending module configured to send satellite coverage information to the UE and/or sending communication control information to the UE, in which the satellite coverage information is coverage information of a satellite network in a specified area, and is configured to set a power saving parameter and a timer related to a power saving management and a mobility management; and the communication control information is configured to control UEs in the same area to communicate with a network in a distributed manner within a preset time range before leaving a satellite signal coverage.

According to a fourth aspect of embodiments of the present disclosure, there is provided an apparatus for controlling a communication of a UE, performed by the UE, including: a receiving module configured to receive satellite coverage information sent by a first network element and/or receiving communication control information sent by the first network element, in which the satellite coverage information is coverage information of a satellite network in a specified area, and is configured to set a power saving parameter and a timer related to a power saving management and a mobility management; and the communication control information is configured to control UEs in the same area to communicate with a network in a distributed manner within a preset time range before leaving a satellite signal coverage.

According to a fifth aspect of embodiments of the present disclosure, there is provided a communication device, including: a transceiver; a memory; and a processor connected to the transceiver and the memory respectively, and configured to control wireless signal reception and transmission of the transceiver and implement the method in the first aspect of embodiments or the second aspect of embodiments of the present disclosure by executing computer executable instructions on the memory.

According to a sixth aspect of embodiments of the present disclosure, there is provided a computer storage medium having stored therein computer executable instructions that, after executed by a processor, cause the method in the first aspect of embodiments or the second aspect of embodiments of the present disclosure to be implemented.

According to a seventh aspect of embodiments of the present disclosure, there is provided a communication system, including: a first network element configured to perform the method in the first aspect of embodiments of the present disclosure; a second network element; and a UE configured to perform the method in the second aspect of embodiments of the present disclosure.

Embodiments of the present disclosure provide a method and an apparatus for controlling a communication of a UE. The first network element is configured to enable the UE to set the power saving parameter and the timer related to the power saving management and mobility management by sending the satellite coverage information to the UE, thereby avoiding unreasonable consumption of a resource of the UE; and the first network element is configured to control the UEs in the same area to randomly communicate with the network within the preset time range before leaving the satellite signal coverage according to the communication control information by sending the communication control information to the UE, such that the network communication of a large number of UEs may be distributed, and it is possible to avoid network congestion caused by simultaneous communications of the large number of UEs and the network when being about to leave the satellite coverage.

Additional aspects and advantages of the present disclosure will be given in part in the following descriptions, become apparent in part from the following descriptions, or be learned from the practice of the present disclosure.

### BRIEF DESCRIPTION OF THE DRAWINGS

The above and/or additional aspects and advantages of the present disclosure will become apparent and more readily appreciated from the following descriptions of embodiments made with reference to the drawings, in which:
FIG. 1 is a schematic flowchart illustrating a method for controlling a communication of a UE according to embodiments of the present disclosure;
FIG. 2 is a schematic flowchart illustrating a method for controlling a communication of a UE according to embodiments of the present disclosure;
FIG. 3 is a schematic flowchart illustrating a method for controlling a communication of a UE according to embodiments of the present disclosure;
FIG. 4 is a schematic flowchart illustrating a method for controlling a communication of a UE according to embodiments of the present disclosure;
FIG. 5 is a schematic flowchart illustrating a method for controlling a communication of a UE according to embodiments of the present disclosure;
FIG. 6 is a schematic flowchart illustrating a method for controlling a communication of a UE according to embodiments of the present disclosure;
FIG. 7 is a schematic flowchart illustrating a method for controlling a communication of a UE according to embodiments of the present disclosure;
FIG. 8 is a schematic flowchart illustrating a method for controlling a communication of a UE according to embodiments of the present disclosure;
FIG. 9 is a schematic flowchart illustrating a method for controlling a communication of a UE according to embodiments of the present disclosure;
FIG. 10 is a schematic flowchart illustrating a method for controlling a communication of a UE according to embodiments of the present disclosure;
FIG. 11 is a sequence chart illustrating a method for controlling a communication of a UE according to embodiments of the present disclosure;
FIG. 12 is a block diagram illustrating an apparatus for controlling a communication of a UE according to embodiments of the present disclosure;
FIG. 13 is a block diagram illustrating an apparatus for controlling a communication of a UE according to embodiments of the present disclosure;
FIG. 14 is a schematic block diagram illustrating a communication device according to embodiments of the present disclosure; and
FIG. 15 is a schematic block diagram illustrating a chip according to embodiments of the present disclosure.

### DETAILED DESCRIPTION

Reference will be made in detail to embodiments of the present disclosure, examples of which are shown in the drawings. The same or similar elements or the elements having the same or similar functions are denoted by the same or similar reference numerals throughout the descriptions. The embodiments described herein with reference to drawings are illustrative, and used to explain the present disclosure. The embodiments shall not be construed to limit the present disclosure.

A 5G core network (5GC) supports a user terminal to access a network via a satellite. In a case where satellite access is configured to provide a network service to a user, the satellite access may be affected by a satellite beam coverage and an insufficient number of satellites in a starlink, and a signal coverage provided to the ground may be discontinuous. That is, in a case where the user accesses the network via the satellite in a certain area, there may be no satellite signal coverage during a specific period of time. For example, after a UE obtains a satellite access signal coverage for 20 minutes, the UE may only obtain a signal coverage for 20 minutes again after 10 hours.

In view of the above scenario, the network or the UE needs to obtain satellite coverage information to sense a period when the UE is within a signal coverage and a period when the UE is outside the signal coverage, determine a behavior of the UE in the period when the UE is outside the signal coverage and a communication before a satellite signal coverage is about to be left, and optimize an access and a network communication of the UE in the scenario of discontinuous satellite access coverage. For example, the UE may enter a power saving state during the period when the UE is outside the signal coverage. Furthermore, it is also possible to avoid a situation that a large number of users in the same area simultaneously communicate with the network to cause network congestion when being about to leave the satellite signal coverage.

Therefore, the present disclosure proposes a method and an apparatus for controlling a communication of a UE, which may enable the UE to maintain a power saving state during a period when a satellite coverage is left, and avoid communication congestion when being about to leave the satellite coverage.

A method and an apparatus for controlling a communication of a UE provided in the present disclosure are introduced in detail below in conjunction with the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with some aspects of the present disclosure as recited in the appended claims.

Terms used herein in the embodiments of the present disclosure are only for the purpose of describing specific embodiments, but should not be construed to limit the embodiments of the present disclosure. As used in the embodiments of the present disclosure and the appended claims, "a/an", and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" or "in a case where" may be construed to mean "when" or "upon" or "in response to determining" depending on the context.

It may be understood that the solution provided in the present disclosure may be applied to a first network element or other executable entities. In the following embodiments of the present disclosure, the technical solution in the present disclosure is explained by taking an execution entity as the first network element as an example, but it does not constitute a specific limitation. The first network element may be an access and mobility management function (AMF), a session management function (SMF), a mobility management entity (MME), or the like, which is not limited in the present disclosure.

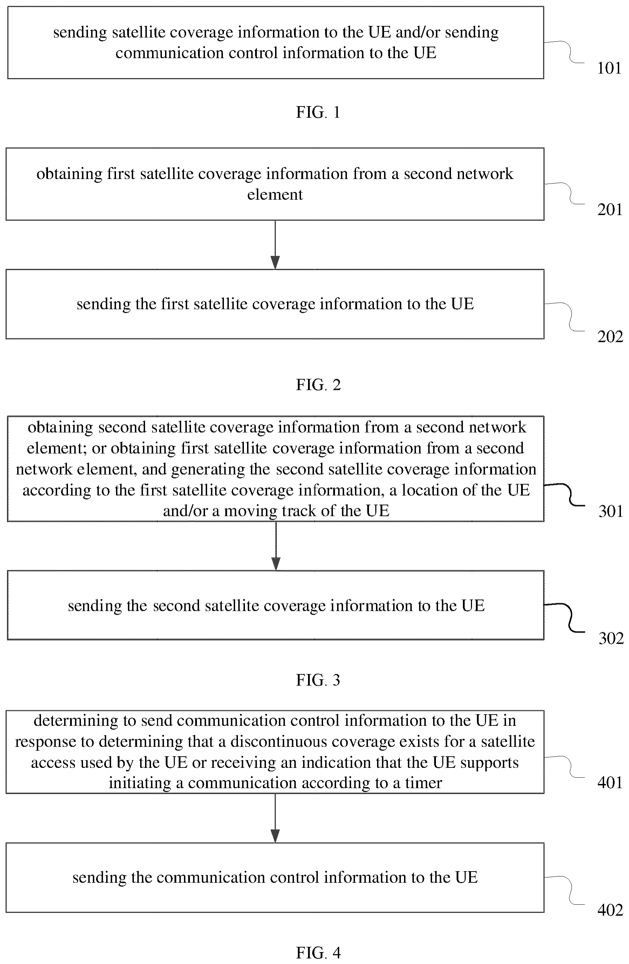

FIG. 1 is a schematic flowchart illustrating a method for controlling a communication of a UE according to embodiments of the present disclosure. As shown in FIG. 1, the method is performed by a first network element and may include the following step.

In step 101, satellite coverage information is sent to the UE and/or communication control information is sent to the UE.

The satellite coverage information is coverage information of a satellite network in a specified area, and is configured to set a power saving parameter and a timer related to a power saving management and a mobility management. The satellite coverage information may include a period when the UE is within a satellite signal coverage and a period when the UE is outside the satellite signal coverage. After the first network element sends the satellite coverage information to the UE, the UE may determine the period when the UE is outside the satellite signal coverage according to the satellite coverage information, and may make a behavior decision to optimize an access behavior of the UE during the period. The behavior decision may include a decision such as deciding a power saving parameter and setting a non-access stratum (NAS) timer for keeping the UE in a power saving state during a period when no signal coverage exists, which is not specifically limited here. The communication control information is configured to control UEs in the same area to communicate with a network in a distributed manner within a preset time range before leaving the satellite signal coverage, thereby avoiding network congestion caused by concentrated communications of a large number of UEs in the same area with the network when being about to leave the satellite signal coverage.

In a specific application scenario, the satellite coverage information may include first satellite coverage information or second satellite coverage information. The first satellite coverage information is satellite coverage information of a satellite network currently used by the UE, or satellite coverage information of at least one available satellite network in a specified area, such as an area to which the UE is about to move. The second satellite coverage information is satellite coverage information of the UE at a current location, or satellite coverage information of the UE at a specified location, such as a location to which the UE is about to move. The first satellite coverage information is the satellite coverage situation in the specified area, and is not associated with a specific user. The second satellite coverage information is satellite coverage information of the UE generated according to the first satellite coverage information, a location of the UE and/or a moving track of the UE, that is, a satellite coverage status of the UE is reflected. For example, the UE is within a satellite coverage at a first time at a location A, and is outside the satellite coverage at a second time at a location B. The first network element may send the first satellite coverage information to the UE, and the UE determines the second satellite coverage information according to the first satellite coverage information, and further make a behavior decision of the UE during satellite access according to the second satellite coverage information determined. Alternatively, the second satellite coverage information may be directly sent to the UE, such that the UE may make the behavior decision according to the second satellite coverage information received.

Regarding the embodiments of the present disclosure, as a possible implementation, after obtaining the satellite coverage information, the first network element may send the satellite coverage information to a corresponding UE, such that the UE accessed using the satellite network maintains a power saving state during a period when no signal coverage exists. The specific implementation process may be found in the specific description of embodiments shown in FIG. 2 or FIG. 3. As a possible implementation, the first network element may send the communication control information to the UE, such that the UEs in the same area communicate with the network in the distributed manner within the preset time range before leaving the satellite signal coverage, and communicate with the network randomly before leaving the signal coverage, thereby avoiding the network congestion caused by simultaneous communications of a large number of UEs with the network. The specific implementation process may be found in the specific description of the embodiments shown in FIG. 4. As a possible implementation, the first network element may send the satellite coverage information to the UE, and the UE may set the power saving parameter and the timer (such as the NAS timer) related to the power saving management and mobility management according to the satellite coverage information, set a timing duration of the timer according to a duration during which the UE is outside the satellite signal coverage, activate the timer at a start time point when the UE is outside the satellite coverage, and maintain the power saving state according to the power saving parameter before the timing of the timer arrives (i.e., during a period when the UE leaves the satellite coverage). The first network element further sends the communication control information to the UE, and the UE may randomly communicate with the network according to the communication control information before leaving the satellite coverage, such that network communications of a large number of UEs may be distributed, and it is possible to avoid the network congestion caused by simultaneous communications of a large number of UEs with the network when being about to leave the satellite coverage. Here, regarding sending the satellite coverage information to the UE, reference may be made to the detailed description of the embodiments shown in FIG. 2 or FIG. 3, and regarding sending the communication control information to the UE, reference may be made to the detailed description of the embodiments shown in FIG. 4. It should be note that the first network element may send the satellite coverage information and the communication control information to the UE simultaneously or non-simultaneously. In a case where the satellite coverage information and the communication control information are not sent simultaneously, for example, in a registration stage of the UE, the network obtains that the UE uses a satellite access with a discontinuous coverage, and sends the communication control information to the UE, indicating that random communication is performed before the UE leaves the satellite coverage in order to avoid the network congestion, and communication periods of multiple UEs are distributed. After successfully registering with the network, the UE requests the network to obtain the satellite coverage information, or may send the satellite coverage information first and then send the communication control information, and the sending order is not specifically limited here. Regarding the above three possible implementations, in the following embodiments of the present disclosure, the third possible implementation is preferentially selected, but it does not constitute a specific limitation.

In summary, according to the method for controlling the communication of the UE provided in the embodiments of the present disclosure, the first network element may send the satellite coverage information to the UE to set the power saving parameter and the timer related to the power saving management and mobility management, thereby avoiding unreasonable consumption of a resource of the UE. The first network element may further send the communication control information to the UE, and control the UEs in the same area to randomly communicate with the network within the preset time range before the UE leaves the satellite signal coverage according to the communication control information, such that the network communication of a large number of UEs may be distributed, and it is possible to avoid the network congestion caused by simultaneous communications of a large number of UEs with the network when being about to leave the satellite coverage.

FIG. 2 is a schematic flowchart illustrating a method for controlling a communication of a UE according to embodiments of the present disclosure. The method is performed by a first network element. Based on the embodiments shown in FIG. 1, as shown in FIG. 2, the method may include the following steps.

In step 201, first satellite coverage information is obtained from a second network element.

The second network element may be an application function (AF) or operation administration and maintenance (OAM), a server for storing satellite operation information, or the like, which is not specifically limited in the present disclosure. The first satellite coverage information is satellite coverage information of a satellite network currently used by the UE, or satellite coverage information of at least one available satellite network in a specified area.

Regarding the embodiments of the present disclosure, in a case where the first network element obtains the first satellite coverage information from the second network element, the first network element may send area information of an area where the UE is currently located or the specified area (such as a movement destination area) to the second network element, and the second network element determines the first satellite coverage information of the available satellite network in an area corresponding to the area information, and sends the first satellite coverage information to the first network element.

In step 202, the first satellite coverage information is sent to the UE.

Regarding the embodiments of the present disclosure, after obtaining the first satellite coverage information from the second network element, the first network element may first perform encryption and integrity protection on the first satellite coverage information by using a common encryption technology for satellite communication information (such as a data encryption standard (DES) code algorithm, an encryption algorithm, or the like), and then send it to the UE. In a case where the first network element sends the first satellite coverage information to the UE, as a possible implementation, the first network element may not process the first satellite coverage information, and transparently forward the first satellite coverage information to the UE. For example, the first satellite coverage information subjected to encryption and integrity protection may be included in an NAS message and sent to a radio access network (RAN) via a downlink NAS transport message, and the RAN may send the NAS message to the UE via a radio resource control downlink (RRC DL) message. As a possible implementation, the first network element may save the first satellite coverage information and send the first satellite coverage information to the UE according to a sending requirement of the UE.

In summary, according to the method for controlling the communication of the UE provided in the embodiments of the present disclosure, the first network element may send the first satellite coverage information to the UE, such that the UE generates the second satellite coverage information according to the first satellite coverage information, location information of the UE and a moving track of the UE, and sets a power saving parameter and a timer related to a power saving management and a mobility management according to the second satellite coverage information to enable the UE to maintain a power saving state during the period when no signal coverage exists, thereby avoiding unreasonable consumption of a resource of the UE.

FIG. 3 is a schematic flowchart illustrating a method for controlling a communication of a UE according to embodiments of the present disclosure. The method is performed by a first network element. Based on the embodiments shown in FIG. 1, as shown in FIG. 3, the method may include the following steps.

In step 301, second satellite coverage information is obtained from a second network element, or first satellite coverage information is obtained from a second network element, and the second satellite coverage information is generated according to the first satellite coverage information, a location of the UE and/or a moving track of the UE.

The second satellite coverage information is satellite coverage information of the UE at a current location, or satellite coverage information of the UE at a specified location. The second satellite coverage information includes at least one of: a time when the UE is within a satellite signal coverage, a duration during which the UE is within a satellite signal coverage, a time when the UE is outside a satellite signal coverage, or a duration during which the UE is outside a satellite signal coverage.

Regarding the embodiments of the present disclosure, in a case where the first network element obtains the second satellite coverage information from the second network element, as a possible implementation, the first network element may send location information of a location where the UE is currently located or the specified location (such as a movement destination) to the second network element, and the second network element determines the second satellite coverage information at a location corresponding to the location information, and sends the second satellite coverage information to the first network element. As a possible implementation, the first network element may send area information of an area where the UE is currently located or the specified area (such as a movement destination area) to the second network element, and the second network element determines the first satellite coverage information of the available satellite network in an area corresponding to the area information, and sends the first satellite coverage information to the first network element. After receiving a first coverage area, the first network element may further generate the second satellite coverage information according to the first satellite coverage information, the location of the UE and/or the moving track of the UE.

In step 302, the second satellite coverage information is sent to the UE.

Regarding the embodiments of the present disclosure, after obtaining the second satellite coverage information, as a possible implementation, the second satellite coverage information may be not processed and transparently transmitted to the UE. As a possible implementation, the first network element may save the second satellite coverage information and send the second satellite coverage information to the UE according to a sending requirement of the UE.

In summary, according to the method for controlling the communication of the UE provided in the embodiments of the present disclosure, the first network element may send the second satellite coverage information to the UE, such that the UE sets a power saving parameter and a timer related to a power saving management and a mobility management according to the second satellite coverage information to enable the UE to maintain a power saving state during a period when no satellite signal coverage exists, thereby avoiding unreasonable consumption of a resource of the UE.

FIG. 4 is a schematic flowchart illustrating a method for controlling a communication of a UE according to embodiments of the present disclosure. The method is performed by a first network element. Based on the embodiments shown in FIGS. 1, 2 and 3, as shown in FIG. 4, the method may include the following steps.

In step 401, it is determined to send communication control information to the UE in response to determining that a discontinuous coverage exists for a satellite access used by the UE or receiving an indication that the UE supports initiating a communication according to a timer.

Regarding the embodiments of the present disclosure, before sending the communication control information to the UE, it is needed to determine whether the UE meets a communication control condition, that is, sense whether the UE uses the satellite access and is within the discontinuous coverage, or whether the UE supports initiating the communication according to the timer. After determining that the discontinuous coverage exists for the satellite access used by the UE or receiving the indication that the UE supports initiating the communication according to the timer, it is determined that the communication control information may be sent to the UE.

In step 402, the communication control information is sent to the UE.

The communication control information may include any one of time range information, a first timer or a communication control indication. The time range information indicates that the UE randomly communicates with a network within a preset time range before leaving a satellite signal coverage. The first timer is set by the first network element according to second satellite coverage information, and is configured to control the UE to communicate with the network at a first timing end moment. The first timing end moment is a timing end moment set by the first timer, and the first timing end moment is within the preset time range before the UE leaves the satellite signal coverage. The preset time range may be set according to an actual application scenario, such as 5 minutes, which is not specifically limited here. The communication control indication is configured to notify the UE using the satellite access with the discontinuous coverage to randomly communicate with the network before leaving the signal coverage. The random communication may enable a large number of UEs in the same area to communicate with the network in a distributed manner.

Regarding the embodiments of the present disclosure, as a possible implementation, after obtaining the first satellite coverage information, when sending the first satellite coverage information to the UE, the first network element may further send the time range information to the UE, such that the UE generates the second satellite coverage information according to the first satellite coverage information, and determines a moment to communicate with the network within the preset time range before leaving the satellite coverage according to the second satellite coverage information and the time range information by itself.

As a possible implementation, after obtaining the second satellite coverage information, the first network element sends the time range information and the second satellite coverage information to the UE, such that the UE may determine the moment to communicate with the network within the preset time range before leaving the satellite coverage according to the second satellite coverage information and the time range information by itself. The time range information is set by the first network element, and the time range information indicates the UE to randomly communicate with the network within the preset time range before the UE leaves the satellite signal coverage. In a case where the UE determines the moment to communicate with the network according to the second satellite coverage information and the time range information, as a possible implementation, the UE may set a second timer according to the time range information and the second satellite coverage information. The second timer is configured to control the UE to communicate with the network at a second timing end moment, the second timing end moment is a timing end moment set by the second timer, and the second timing end moment is within the preset time range before the UE leaves the satellite signal coverage. As a possible implementation, the UE may generate an unreachable period of the UE according to the time range information and the second satellite coverage information, in which the unreachable period is configured to control the UE to communicate with the network before the unreachable period starts, and a start time of the unreachable period of the UE is within the preset time range before the UE leaves the satellite signal coverage.

As a possible implementation, after the first network element obtains the second satellite coverage information, the first network element may further configure the first timer for the UE according to the second satellite coverage information, and set a timing duration of the first timer. An end time point corresponding to the timing duration (i.e., the first timing end moment) is within the preset time range before the UE leaves the satellite signal coverage. Then, the first timer is sent to the UE, such that the UE activates the first timer when receiving the first timer, and communicates with the network after the timing expires. Since durations of the first timers received by respective UEs are different, the effect that multiple UEs communicate with the network simultaneously in the distributed manner may be implemented.

For example, the UEs using the satellite network with the discontinuous coverage in the same area include a UE A, a UE B and a UE C. The users will leave the satellite coverage at 3:00 at their respective current locations. The first network element may set a first timer for the UE A, a first timer for the UE B and a first timer for the UE C, respectively, such that the first timer for the UE A expires at 2:50, the first timer for the UE B expires at 2:55, and the first timer for the UE C expires at 2:57. The first network element sends the first timer to the corresponding UE, and the UE activates the first timer and initiates the communication with the network (for example, sending a registration update message) after the first timer expires. Since durations of the first timers for respective UEs are different, a communication time before leaving the satellite coverage may be distributed. Without the first timer, the UEs may communicate with the network simultaneously when being about to leave the satellite coverage, resulting in communication congestion.

As a possible implementation, after obtaining the first satellite coverage information, the first network element sends the communication control indication and the first satellite coverage information to the UE, such that the UE generates the second satellite coverage information according to the first satellite coverage information, and determines the moment to communicate with the network within the preset time range before leaving the satellite coverage according to the second satellite coverage information and the communication control indication by itself. In a case where the UE generates the second satellite coverage information according to the first satellite coverage information, as a possible implementation, the UE may determine satellite coverage information related to the UE in the first satellite coverage information according to its own location, or determine the second satellite coverage information in combination with a specified location on a motion track, such as a location where the UE is about to move.

As a possible implementation, after obtaining the first satellite coverage information, the first network element may send the communication control indication and the second satellite coverage information to the UE, such that the UE determines the moment to communicate with the network within the preset time range before leaving the satellite coverage according to the second satellite coverage information and the communication control indication by itself. Preset time range information is customized by the UE in response to the communication control indication, and is configured to enable the UE to communicate with the network randomly within the preset time range before leaving the satellite signal coverage. In a case where the UE determines the moment to communicate with the network according to the second satellite coverage information and the communication control indication, as a possible implementation, the UE may set the second timer according to the preset time range information and the second satellite coverage information. The second timer is configured to control the UE to communicate with the network at the second timing end moment, the second timing end moment is the timing end moment set by the second timer, and the second timing end moment is within the preset time range before the UE leaves the satellite signal coverage. As a possible implementation, the UE may generate the unreachable period of the UE according to the preset time range information and the second satellite coverage information, in which the unreachable period is configured to control the UE to communicate with the network before the unreachable period starts, and the start time of the unreachable period of the UE is within the preset time range before the UE leaves the satellite signal coverage.

In summary, according to the method for controlling the communication of the UE provided in the embodiments of the present disclosure, the first network element may send the communication control information to the UE using the satellite access with the discontinuous coverage, and use the communication control information to control the UEs in the same area to communicate with the network in the distributed manner within the preset time range before leaving the satellite signal coverage, thereby avoiding network congestion caused by simultaneous communication of a large number of UEs when being about to leave the satellite coverage.

It may be understood that the solution provided in the present disclosure may be applied to the UE or other executable entities. In the following embodiments of the present disclosure, the technical solution in the present disclosure is described by taking the execution entity as the UE as an example, but it does not constitute a specific limitation. The terminal may be a mobile phone, a notebook, a tablet computer, a point-of-sale (POS) machine, a vehicle-mounted computer, or other communication devices, which is not limited in the present disclosure.

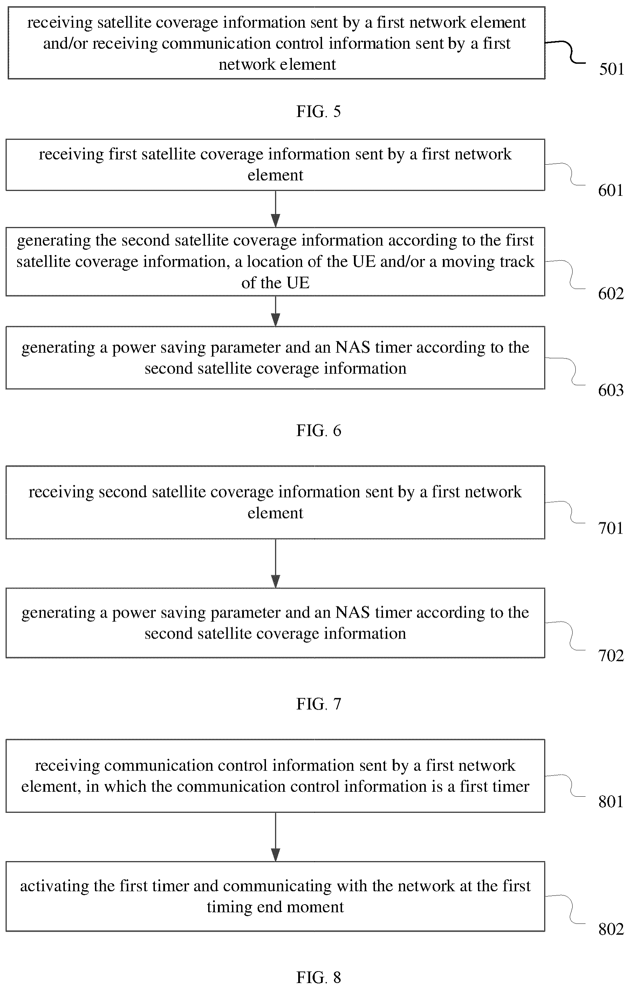

FIG. 5 is a schematic flowchart illustrating a method for controlling a communication of a UE according to embodiments of the present disclosure. As shown in FIG. 5, the method is performed by the UE and may include the following step.

In step 501, satellite coverage information sent by a first network element is received and/or communication control information sent by the first network element is received.

The satellite coverage information is coverage information of a satellite network in a specified area, and is configured to set a power saving parameter and a timer related to a power saving management and a mobility management. The satellite coverage information may include first satellite coverage information or second satellite coverage information. The first satellite coverage information is satellite coverage information of a satellite network currently used by the UE or satellite coverage information of at least one available satellite network in a specified area, such as an area to which the UE is about to move. The second satellite coverage information is satellite coverage information of the UE at a current location, or satellite coverage information of the UE at a specified location, such as a location to which the UE is about to move. The first satellite coverage information is the satellite coverage situation in the specified area, and is not associated with a specific user. The second satellite coverage information is satellite coverage information of the UE generated according to the first satellite coverage information, a location of the UE and/or a moving track of the UE, that is, a satellite coverage status of the UE is reflected. For example, the UE is within a satellite coverage at a first time at a location A, and is outside the satellite coverage at a second time at a location B. The communication control information is configured to control UEs in the same area to communicate with a network in a distributed manner within a preset time range before leaving a satellite signal coverage, thereby avoiding network congestion caused by concentrated communications of a current UE and a large number of UEs in the same area with the network when being about to leave the satellite signal coverage.

Correspondingly, the UE may receive the satellite coverage information sent by the first network element, perform a behavior decision according to the satellite coverage information, and optimize an access behavior of the UE. The behavior decision may include determining a power saving parameter, setting an NAS timer and the like, which is not specifically limited here. As a possible implementation, in a case where the satellite coverage information received by the UE is the first satellite coverage information, the UE may first determine the second satellite coverage information according to the first satellite coverage information, and then make the behavior decision according to the second satellite coverage information determined. As a possible implementation, in a case where the satellite coverage information received by the UE is the second satellite coverage information, the UE may directly make the behavior decision according to the second satellite coverage information.

Regarding the embodiments of the present disclosure, as a possible implementation, the UE may receive the satellite coverage information sent by the first network element, and may enter a power saving state during a period when the satellite signal coverage is left according to the satellite coverage information. The specific implementation process may be found in the specific description of the embodiments shown in FIG. 6 or FIG. 7. As a possible implementation, the UE may receive the communication control information sent by the first network element, and may communicate with the network together with other UEs in the same area in the distributed manner according to the communication control information when being about to leave the satellite signal coverage, thereby avoiding network congestion caused by simultaneous communications of a large number of UEs with the network. The specific implementation process may be found in the specific description of the embodiments shown in FIG. 8, FIG. 9, or FIG. 10. As a possible implementation, the UE may receive the satellite coverage information and the communication control information sent by the first network element. The UE may maintain the power saving state according to the satellite coverage information during the period when the satellite signal coverage is left, and avoid communication congestion according to the communication control information when being about to leave the satellite coverage. The technical implementation process in which the UE maintains the power saving state according to the satellite coverage information may be found in the specific description of the embodiments shown in FIG. 6 or FIG. 7, and the technical implementation process in which the UE communicates with the network together with other UEs in the same area in the distributed manner according to the communication control information may be found in the specific description of the embodiments shown in FIG. 8 or FIG. 9 or FIG. 10. It should be noted that the first network element may send the satellite coverage information and the communication control information to the UE simultaneously or non-simultaneously. In a case where the satellite coverage information and the communication control information are not sent simultaneously, for example, in a registration stage of the UE, the network obtains that the UE uses a satellite access with a discontinuous coverage, and sends the communication control information to the UE, indicating that random communication is performed before the UE leaves the satellite coverage in order to avoid network congestion, and communication periods of multiple UEs are distributed. After successfully registering with the network, the UE requests the network to obtain the satellite coverage information, or may send the satellite coverage information first and then send the communication control information, and the sending order is not specifically limited here. Regarding the above three possible implementations, in the following embodiments of the present disclosure, the third possible implementation is preferentially selected, but it does not constitute a specific limitation.

In summary, according to the method for controlling the communication of the UE provided in the embodiments of the present disclosure, the UE may receive the satellite coverage information sent by the first network element, and set the power saving parameter and the timer related to the power saving management and mobility management according to the satellite coverage information, thereby avoiding unreasonable consumption of a resource of the UE. The UE may further receive the communication control information sent by the first network element, and communicate with the network together with other UEs in the same area in the distributed manner according to the communication control information, thereby avoiding network congestion caused by simultaneous communications of a large number of UEs with the network when being about to leave the satellite coverage.

FIG. 6 is a schematic flowchart illustrating a method for controlling a communication of a UE according to embodiments of the present disclosure. Based on the embodiments shown in FIG. 5, as shown in FIG. 6, the method is performed by the UE, and may include the following steps.

In step 601, first satellite coverage information sent by a first network element is received.

The first satellite coverage information is satellite coverage information of a satellite network currently used by the UE, or satellite coverage information of at least one available satellite network in a specified area. In a specific application scenario, the first satellite coverage information may be satellite coverage information obtained from a second network element after the first network element sends area information of an area where the UE is currently located or the specified area (such as a movement destination area) to the second network element. The second network element may be an AF or OAM, a server for storing satellite operation information, or the like, which is not specifically limited in the present disclosure.

Regarding the embodiments of the present disclosure, after receiving first satellite coverage information subjected to encryption and integrity protection, the UE may perform integrity check, decryption and other processing on the information, and save the first satellite coverage information processed.

In step 602, the second satellite coverage information is generated according to the first satellite coverage information, a location of the UE and/or a moving track of the UE.

The second satellite coverage information includes at least one of: a time when the UE is within the satellite signal coverage, a duration during which the UE is within the satellite signal coverage, a time when the UE is outside the satellite signal coverage, or a duration during which the UE is outside the satellite signal coverage.

The second satellite coverage information is related to a specific location of the UE. Regarding the embodiments of the present disclosure, after obtaining the first satellite coverage information, the UE may determine satellite coverage information related to the UE in the first satellite coverage information according to its own location, or determine the second satellite coverage information in combination with a specified location on a motion track, such as a location where the UE is about to move.

In step 603, a power saving parameter and an NAS timer are generated according to the second satellite coverage information.

The power saving parameter and the NAS timer include at least one of: an eDRX parameter in a CM-IDLE state, a parameter for configuring an MICO mode, a parameter for configuring a PSM state, a timing duration of a periodic registration timer, a timing duration of a mobile reachable timer, or a timing duration of an implicit de-registration timer.

Regarding the embodiments of the present disclosure, as a possible application scenario, in a case where the UE may generate the power saving parameter and the NAS timer according to the second satellite coverage information, the UE may specifically determine an unreachable period of the UE according to the second satellite coverage information. The unreachable period includes a period when no satellite signal coverage exists, and a power saving state is maintained during this period. Furthermore, the NAS timer is set, and after a timing of the NAS timer expires, the UE may initiate a network registration update and re-establish the communication with the network after the satellite signal coverage is restored. As a possible application scenario, the UE may initiate a mobile registration update request to the first network element to request the first network element to provide the second satellite coverage information, and generate the power saving parameter, the NAS timer and the like according to the second satellite coverage information.

In summary, according to the method for controlling the communication of the UE provided in the embodiments of the present disclosure, after receiving the first satellite coverage information sent by the first network element, the UE may generate the second satellite coverage information according to the first satellite coverage information, and set the power saving parameter and the timer related to the power saving management and mobility management according to the second satellite coverage information to enable the UE to maintain the power saving state, thereby avoiding unreasonable consumption of a resource of the UE.

FIG. 7 is a schematic flowchart illustrating a method for controlling a communication of a UE according to embodiments of the present disclosure. Based on the embodiments shown in FIG. 5, as shown in FIG. 7, the method is performed by the UE, and may include the following steps.

In step 701, second satellite coverage information sent by a first network element is received.

The second satellite coverage information includes at least one of: a time when the UE is within the satellite signal coverage, a duration during which the UE is within the satellite signal coverage, a time when the UE is outside the satellite signal coverage, or a duration during which the UE is outside the satellite signal coverage. In a specific application scenario, the second satellite coverage information may be satellite coverage information generated by a second network element according to a location of the UE and/or a moving track of the UE and provided to the second network element. Alternatively, the second satellite coverage information may be satellite coverage information further generated by the first network element according to first satellite coverage information, the location of the UE and/or the moving track of the UE after the first network element sends area information of an area where the UE is currently located or a specified area (such as a movement destination area) to the second network element, and obtains the first satellite coverage information from the second network element.

In step 702, a power saving parameter and an NAS timer are generated according to the second satellite coverage information.

The power saving parameter and the NAS timer include at least one of: an eDRX parameter in a CM-IDLE state, a parameter for configuring an MICO mode, a parameter for configuring a PSM state, a timing duration of a periodic registration timer, a timing duration of a mobile reachable timer, or a timing duration of an implicit de-registration timer.

Regarding the embodiments of the present disclosure, as a possible application scenario, in a case where the UE generates the power saving parameter and the NAS timer according to the second satellite coverage information, the UE may determine a period when the UE leaves the satellite coverage according to the second satellite coverage information, set a timer for controlling the UE to maintain a power saving state according to the power saving parameter during the period when the UE leaves the satellite coverage, set a timing duration of the timer according to the duration when the UE leaves the satellite coverage, activate the timer at a start time point of the period when the UE is outside the satellite coverage, and maintain itself in the power saving state according to the power saving parameter until the timing of the timer arrives, that is, during the period when the UE leaves the satellite coverage. Specifically, an unreachable period of the UE may be determined according to the second satellite coverage information. The unreachable period includes the period when the UE leaves the satellite coverage, and the power saving state may be maintained during the unreachable period. Moreover, the NAS timer is further set, and after the timing of the NAS timer expires, the UE may re-enter the satellite signal coverage and re-establish the communication with the network by sending a registration update. As a possible application scenario, the UE may initiate a mobile registration update request to the first network element, obtain the second satellite coverage information, and generate the power saving parameter, the NAS timer and the like according to the second satellite coverage information.

In summary, according to the method for controlling the communication of the UE provided in the embodiments of the present disclosure, the UE may receive the second satellite coverage information sent by the first network element, and may set the power saving parameter and the timer related to the power saving management and mobility management according to the second satellite coverage information to maintain the UE in the power saving state, thereby avoiding the unreasonable consumption of a resource of the UE.

FIG. 8 is a schematic flowchart illustrating a method for controlling a communication of a UE according to embodiments of the present disclosure. Based on the embodiments shown in FIGS. 5, 6 and 7, as shown in FIG. 8, the method is performed by the UE, and may include the following steps.

In step 801, communication control information sent by a first network element is received, in which the communication control information is a first timer.

The first timer is set by the first network element according to second satellite coverage information and is configured to control the UE to communicate with a network at a first timing end moment. An end time point (that is, the first timing end moment) corresponding to a timing duration of the first timer is within a preset time range before the UE leaves a satellite signal coverage. The preset time range may be set according to the actual application scenario, such as 5 minutes, which is not specifically limited here. The second satellite coverage information includes at least one of: a time when the UE is within the satellite signal coverage, a duration during which the UE is within the satellite signal coverage, a time when the UE is outside the satellite signal coverage, or a duration during which the UE is outside the satellite signal coverage.

In step 802, the UE activates the first timer and communicates with the network at the first timing end moment.

Regarding the embodiments of the present disclosure, after receiving the first timer, the UE may activate the first timer. At this time, the first timer executes a corresponding timing process according to a timing duration randomly set by the first network element. After the timing of the first timer expires, the UE may communicate with the network at the first timing end moment. The UE communicates with the network at the first timing end moment, including at least one of: sending a power saving parameter and an NAS timer to the first network element, sending the second satellite coverage information to the first network element, or sending unreachable period information of the UE to the first network element.

For example, the UEs using a satellite network with a discontinuous coverage in the same area include a UE A, a UE B and a UE C. The users will leave the satellite coverage at 3:00 at their respective current locations. The first network element may set a first timer for the UE A, a first timer for the UE B and a first timer for the UE C, respectively, such that the first timer for the UE A expires at 2:50, the first timer for the UE B expires at 2:55, and the first timer for the UE C expires at 2:57. The first network element sends the first timer to the corresponding UE, and the UE activates the first timer and initiates the communication with the network (for example, sending a registration update message) after the first timer expires. Since durations of the first timers for respective UEs are different, a communication time before leaving the satellite coverage may be distributed. Without the first timer, the UEs may communicate with the network simultaneously when being about to leave the satellite coverage, resulting in communication congestion.

In summary, according to the method for controlling the communication of the UE provided in the embodiments of the present disclosure, the first network element may send the communication control information to the UE using the satellite access with the discontinuous coverage, and use the communication control information to control UEs in the same area to communicate with a network in a distributed manner within the preset time range before leaving a satellite signal coverage, thereby avoiding network congestion caused by simultaneous communications of a large number of UEs with the network when being about to leave the satellite coverage.

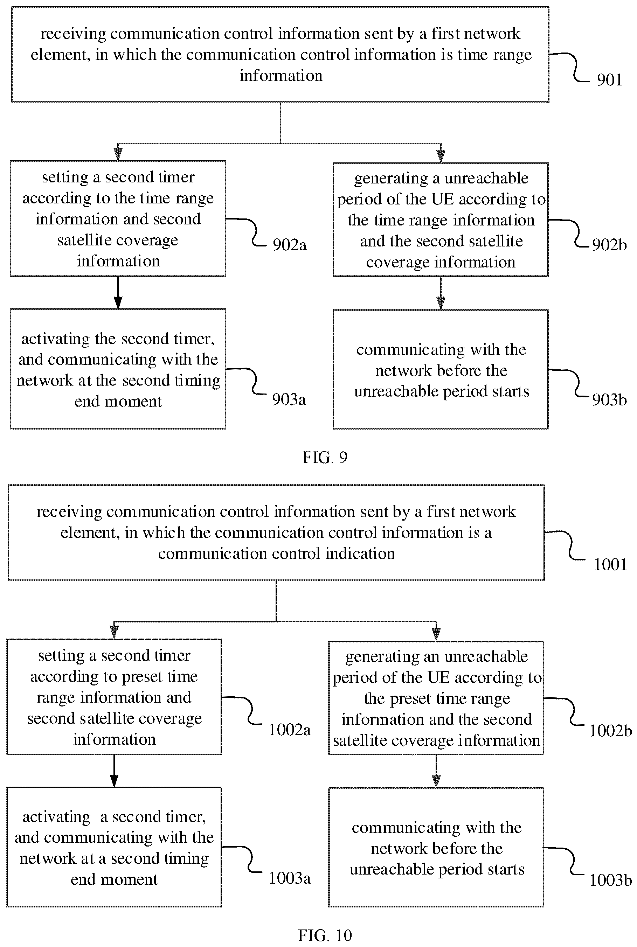

FIG. 9 is a schematic flowchart illustrating a method for controlling a communication of a UE according to embodiments of the present disclosure. Based on the embodiments shown in FIGS. 5, 6 and 7, as shown in FIG. 9, the method is performed by the UE, and may include the following steps.

In step 901, communication control information sent by a first network element is received, in which the communication control information is time range information.

The time range information is set by the first network element, and the time range information indicates the UE to randomly communicate with a network within a preset time range before leaving a satellite signal coverage. The preset time range may be set according to the actual application scenario, such as 5 minutes, which is not specifically limited here.

In step 902a, a second timer is set according to the time range information and second satellite coverage information.

The second timer is set by the UE according to the second satellite coverage information and the time range information, and is configured to control the UE to communicate with the network at a second timing end moment, and the second timing end moment is within the preset time range before the UE leaves the satellite signal coverage. The second satellite coverage information includes at least one of: a time when the UE is within the satellite signal coverage, a duration during which the UE is within the satellite signal coverage, a time when the UE is outside the satellite signal coverage, or a duration during which the UE is outside the satellite signal coverage.

Regarding the embodiments of the present disclosure, the UE may set a duration of the second timer according to the time when the UE is outside a satellite coverage indicated by the second satellite coverage information and the preset time range, such that a moment when the second timer expires is within a time range before the time when the UE is outside the satellite coverage.

In step 903a, the UE activates the second timer, and communicates with the network at the second timing end moment.

Regarding the embodiments of the present disclosure, after setting the second timer, the UE may activate the second timer. At this time, the second timer executes a corresponding timing process according to a timing duration randomly set by the UE. After the timing of the second timer expires, the UE may establish a communication with the network at the second timing end moment. The UE communicates with the network at the second timing end moment, including at least one of: sending a power saving parameter and an NAS timer to the first network element, sending the second satellite coverage information to the first network element, or sending unreachable period information of the UE to the first network element.

For example, a current UE determines that a time when the satellite signal coverage is left at a current location is 2:00 according to the second satellite coverage information, and the time range information indicates that the UE randomly communicates with the network within a preset time range (e.g., 5 minutes) before leaving the satellite signal coverage. In a case where the UE sets a duration of the second timer and activates the second timer such that an expiration time of the second timer is between 1:55 and 2:00, the UE initiates a communication with the network when the second timer expires. Similarly, the expiration time of the second timer set by a second UE in this area is also within the preset time range, but the duration of the second timer for the second UE is different from the duration of the second timer for other UEs. In this way, a communication time between each UE and the network in the same satellite signal coverage area may be distributed, and network congestion caused by concentrated communications of multiple UEs with the network may be avoided.

In step 902b in the above embodiments parallel to step 902a in the above embodiments, an unreachable period of the UE is generated according to the time range information and the second satellite coverage information.

The unreachable period is configured to control the UE to communicate with the network before the unreachable period starts, and a start time of the unreachable period of the UE is within the preset time range before the UE leaves the satellite signal coverage.

Regarding the embodiments of the present disclosure, the UE may determine a preset time range indicated by the first network element for the UE to randomly communicate with the network before the UE leaves the satellite signal coverage, and determine a period when the UE is outside the satellite signal coverage according to the second satellite coverage information, and then generate the unreachable period of the UE according to the period when the UE is outside the satellite signal coverage and the preset time range, such that the unreachable period of the UE includes the period when the UE is outside the satellite signal coverage, and a start time of the unreachable period of the UE is within the preset time range before the UE leaves the satellite signal coverage.

In step 903b, the UE communicates with the network before the unreachable period starts.

For example, the current UE determines that a period when the satellite signal coverage is left is 2:00 to 3:00 according to the second satellite coverage information, and the time range information indicates that the UE randomly communicates with the network within the preset time range (e.g., 5 minutes) before leaving the satellite signal coverage. Therefore, the UE may generate the unreachable period of the UE according to the time range information and the period when the UE is outside the satellite signal coverage included in the second satellite coverage information, and enable the start time of the unreachable period of the UE to be within the preset time range before the UE leaves the satellite signal coverage. For example, the UE sets the unreachable period to be 1:55 to 3:00 according to the period when no satellite signal coverage exists and the time range information. The UE communicates with the network before 1:55. Correspondingly, other UEs in the same area that are about to leave the satellite signal coverage may further set the respective unreachable periods, and start times of the unreachable periods set for different UEs are randomly set to different values. In this way, the communication time between each UE and the network in the same satellite signal coverage area may be distributed, and network congestion caused by concentrated communications of multiple UEs with the network may be avoided.

In summary, according to the method for controlling the communication of the UE provided in the embodiments of the present disclosure, the first network element may send the communication control information to the UE using a satellite access with a discontinuous coverage, and use the communication control information to control the UEs in the same area to communicate with a network in a distributed manner within the preset time range before leaving the satellite signal coverage, thereby avoiding network congestion caused by simultaneous communications of a large number of UEs with the network when being about to leave the satellite coverage.

FIG. 10 is a schematic flowchart illustrating a method for controlling a communication of a UE according to embodiments of the present disclosure. Based on the embodiments shown in FIGS. 5, 6 and 7, as shown in FIG. 10, the method is performed by the UE, and may include the following steps.

In step 1001, communication control information sent by a first network element is received, in which the communication control information is a communication control indication.

The communication control indication is configured to notify the UE using a satellite access with a discontinuous coverage to randomly communicate with a network before leaving the satellite signal coverage.

In step 1002a, a second timer is set according to preset time range information and second satellite coverage information.

The preset time range information is customized by the UE in response to the communication control indication, which is configured to enable the UE to randomly communicate with a network within a preset time range before the UE leaves a satellite signal coverage. The preset time range may be set according to the actual application scenario, such as 5 minutes, which is not specifically limited here.

Regarding the specific implementation process in these embodiments of the present disclosure, reference may be made to the relevant description in step 902a in the above embodiments, which will not be repeated here.

In step 1003a, the UE activates a second timer, and communicates with the network at a second timing end moment.

Regarding the specific implementation process in these embodiments of the present disclosure, reference may be made to the relevant description in step 903a in the above embodiments, which will not be repeated here.

In step 1002b in the above embodiments parallel to step 1002a in the above embodiments, an unreachable period of the UE is generated according to the preset time range information and the second satellite coverage information.

The unreachable period is configured to control the UE to communicate with the network before the unreachable period starts, and a start time of the unreachable period of the UE is within the preset time range before the UE leaves the satellite signal coverage.

In step 1003b, the UE communicates with the network before the unreachable period starts.

For example, a current UE determines that a period when the satellite signal coverage is left is 2:00 to 3:00 according to the second satellite coverage information, and the preset time range information indicates that the UE randomly communicates with the network within the preset time range (e.g., 5 minutes) before leaving the satellite signal coverage. Therefore, the UE may generate the unreachable period of the UE according to the time range information and the second satellite coverage information, and enable the start time of the unreachable period of the UE to be within the preset time range before the UE leaves the satellite signal coverage. For example, the UE sets the unreachable period to be 1:52 to 3:00. Regarding the embodiments of the present disclosure, the UE may communicate with the network before the unreachable period, for example, at 1:51. Correspondingly, other UEs in the same area that are about to leave the satellite signal coverage may further set the respective unreachable periods, and start times of the unreachable periods set for different UEs are randomly set to different values. In this way, the communication time between each UE and the network in the same satellite signal coverage area may be distributed, and network congestion caused by concentrated communications of multiple UEs with the network may be avoided.

In summary, according to the method for controlling the communication of the UE provided in the embodiments of the present disclosure, the first network element may send the communication control information to the UE using the satellite access with the discontinuous coverage, and use the communication control information to control the UEs in the same area to communicate with a network in a distributed manner within the preset time range before leaving the satellite signal coverage, thereby avoiding network congestion caused by simultaneous communications of a large number of UEs with the network when being about to leave the satellite coverage.

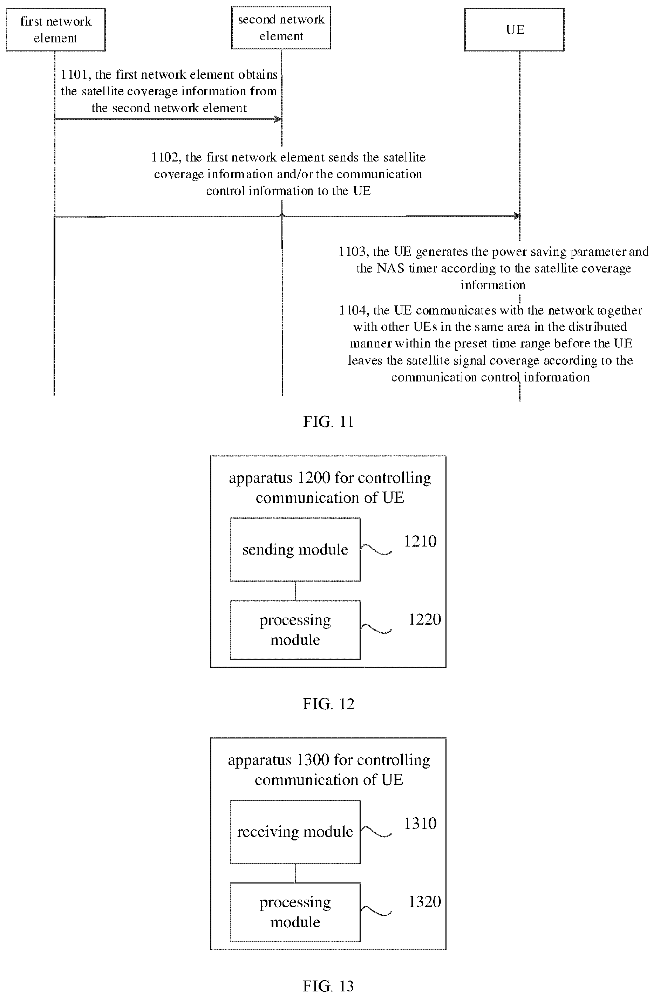

FIG. 11 is a sequence chart illustrating a method for controlling a communication of a UE according to embodiments of the present disclosure. The method is applied to a communication system, including: a first network element, a second network element and a UE. The first network element obtains satellite coverage information from the second network element, the first network element sends the satellite coverage information and/or communication control information to the UE, the UE generates a power saving parameter and an NAS timer according to the satellite coverage information, and the UE communicates with a network together with other UEs in the same area in a distributed manner within a preset time range before leaving a satellite signal coverage according to the communication control information.

Referring to FIG. 11, the method includes the following steps.

In step 1101, the first network element obtains the satellite coverage information from the second network element.

The satellite coverage information may include first satellite coverage information or second satellite coverage information. The first satellite coverage information is satellite coverage information of a satellite network currently used by the UE, or satellite coverage information of at least one available satellite network in a specified area, such as an area to which the UE is about to move. The second satellite coverage information is satellite coverage information of the UE at a current location, or satellite coverage information of the UE at a specified location, such as a location to which the UE is about to move. The first satellite coverage information is the satellite coverage situation in the specified area, and is not associated with a specific user. The second satellite coverage information is satellite coverage information of the UE generated according to the first satellite coverage information, a location of the UE and/or a moving track of the UE, that is, reflecting a satellite coverage status of the UE. For example, the UE is within the satellite coverage at a first time at a location A, and is outside the satellite coverage at a second time at a location B.

Regarding the embodiments of the present disclosure, as a possible implementation, the first network element may obtain the first satellite coverage information from the second network element. Specifically, the first network element may send area information of an area where the UE is currently located or a specified area (such as a movement destination area) to the second network element, and the second network element determines the first satellite coverage information of the available satellite network in an area corresponding to the area information, and sends the first satellite coverage information to the first network element.

Regarding the embodiments of the present disclosure, as a possible implementation, the first network element may obtain the second satellite coverage information from the second network element. Specifically, the first network element may send location information of a location where the UE is currently located or the specified location (such as a movement destination) to the second network element, and the second network element determines the second satellite coverage information at a location corresponding to the location information, and sends the second satellite coverage information to the first network element. Alternatively, the first network element may send the area information of the area where the UE is currently located or the specified area (such as a movement destination area) to the second network element, and the second network element determines the first satellite coverage information of the available satellite network in the area corresponding to the area information, and sends the first satellite coverage information to the first network element. After receiving a first coverage area, the first network element may further generate the second satellite coverage information according to the first satellite coverage information, the location of the UE and/or the moving track of the UE.

In step 1102, the first network element sends the satellite coverage information and/or the communication control information to the UE.

The communication control information is configured to control the UEs in the same area to communicate with the network in the distributed manner within the preset time range before leaving he satellite signal coverage, thereby avoiding network congestion caused by concentrated communications of a large number of UEs in the same area with the network when being about to leave the satellite signal coverage. The communication control information may include any one of time range information, a first timer or a communication control indication. The time range information indicates the UE to randomly communicate with the network within the preset time range before leaving the satellite signal coverage. The first timer is set according to the second satellite coverage information and is configured to control the UE to communicate with the network at a first timing end moment, and the first timing end moment is within the preset time range before the UE leaves the satellite signal coverage. The preset time range may be set according to the actual application scenario, such as 5 minutes, which is not specifically limited here. The communication control indication is configured to notify the UE using the satellite access with the discontinuous coverage to randomly communicate with the network before leaving the signal coverage. The random communication may enable a large number of UEs in the same area to communicate with the network in the distributed manner.

Regarding the embodiments of the present disclosure, in a case where the first network element sends the satellite coverage information to the UE, as a possible implementation, the first network element may send the first satellite coverage information to the UE; and as a possible implementation, the first network element may send the second satellite coverage information to the UE.

Correspondingly, in a case where the first network element sends the communication control information to the UE, the following applies.

As a possible implementation, after sending the first satellite coverage information to the UE, the first network element may send the time range information to the UE, such that the UE generates the second satellite coverage information according to the first satellite coverage information, and determines a moment to communicate with the network within the preset time range before leaving the satellite coverage according to the second satellite coverage information and the time range information by itself.

As a possible implementation, after sending the second satellite coverage information to the UE, the first network element may send the time range information to the UE, such that the UE determines a moment to communicate with the network within the preset time range before leaving the satellite coverage according to the second satellite coverage information and the time range information by itself.

As a possible implementation, after obtaining the second satellite coverage information, the first network element may configure the first timer for the UE according to the second satellite coverage information and set a timing duration of the first timer. An end time point corresponding to the timing duration (i.e., the first timing end moment) is within the preset time range before the UE leaves the satellite signal coverage. Then, the first timer is sent to the UE, such that the UE activates the first timer when receiving the first timer, and communicates with the network after the timing expires. Since durations of the first timers received by respective UEs are different, the effect that multiple UEs communicate with the network simultaneously in the distributed manner may be implemented.

As a possible implementation, after obtaining the first satellite coverage information, the first network element may send the communication control indication and the first satellite coverage information to the UE, such that the UE generates the second satellite coverage information according to the first satellite coverage information, and determines the moment to communicate with the network within the preset time range before leaving the satellite coverage according to the second satellite coverage information and the communication control indication by itself.

As a possible implementation, after obtaining the first satellite coverage information, the first network element may send the communication control indication and the second satellite coverage information to the UE, such that the UE determines the moment to communicate with the network within the preset time range before leaving the satellite coverage according to the second satellite coverage information and the communication control indication.

In step 1103, the UE generates the power saving parameter and the NAS timer according to the satellite coverage information.

The power saving parameter and the NAS timer include at least one of: an eDRX parameter in a CM-IDLE state, a parameter for configuring an MICO mode, a parameter for configuring a PSM state, a timing duration of a periodic registration timer, a timing duration of a mobile reachable timer, or a timing duration of an implicit de-registration timer.

Regarding the embodiments of the present disclosure, as a possible implementation, in response to receiving the first satellite coverage information sent by the first network element, the UE may generate the second satellite coverage information according to the first satellite coverage information, the location of the UE and/or the moving track of the UE, and then generate the power saving parameter and the NAS timer according to the second satellite coverage information. As a possible implementation, in response to receiving the second satellite coverage information sent by the first network element, the UE may directly generate the power saving parameter and the NAS timer according to the second satellite coverage information received. In a case where the power saving parameter and the NAS timer are generated according to the second satellite coverage information, the unreachable period of the UE may be determined according to the second satellite coverage information. The unreachable period includes a period when no satellite signal coverage exists, and the power saving state may be maintained during this period. Moreover, the NAS timer is further set, and after a timing of the NAS timer expires, the UE may initiate a network registration update and re-establish the communication with the network after the satellite signal coverage is restored.

In step 1104, the UE with other UEs in the same area in the distributed manner within the preset time range before the UE leaves the satellite signal coverage according to the communication control information.

Regarding the embodiments of the present disclosure, as a possible implementation, in response to receiving the communication control information sent by the first network element being the time range information, the UE may set the second timer according to the time range information and the second satellite coverage information, in which the second timer is configured to control the UE to communicate with the network at a second timing end moment, and the second timing end moment is within the preset time range before the UE leaves the satellite signal coverage. After setting the second timer, the UE may activate the second timer. At this time, the second timer executes a corresponding timing process according to a timing duration randomly set by the UE.

Regarding the embodiments of the present disclosure, as a possible implementation, in response to receiving the communication control information sent by the first network element being the time range information, the UE may generate the unreachable period of the UE according to the time range information and the second satellite coverage information, and communicate with the network before the unreachable period starts.

As a possible implementation, in response to receiving the communication control information sent by the first network element being the first timer, the UE may activate the first timer. At this time, the first timer executes a corresponding timing process according to a timing duration randomly set by the first network element. After the timing of the first timer expires, the UE may communicate with the network at the first timing end moment.

As a possible implementation, in response to receiving the communication control information sent by the first network element being the communication control indication, the UE may set the preset time range information in response to the communication control indication, set the second timer according to the preset time range information and the second satellite coverage information, activate the second timer, and communicate with the network at the second timing end moment.

As a possible implementation, in response to receiving the communication control information sent by the first network element being the communication control indication, the UE may set the preset time range information in response to the communication control indication, generate the unreachable period of the UE according to the preset time range information and the second satellite coverage information, and communicate with the network before the unreachable period starts.

The communication between the UE and the network may include at least one of: sending the power saving parameter and the NAS timer to the first network element, sending the second satellite coverage information to the first network element, or sending unreachable period information of the UE to the first network element.

By applying the method for controlling the communication of the UE provided in these embodiments, the satellite coverage information may be sent to the UE via the first network element, such that the UE sets the power saving parameter and the timer related to the power saving management and mobility management according to the satellite coverage information, thereby maintaining the UE in the power saving state and avoiding unreasonable consumption of a resource of the UE. The communication control information may be further sent to the UE via the first network element, and according to the communication control information, the UEs in the same area may be controlled to randomly communicate with the network within the preset time range before leaving the satellite signal coverage, thereby distributing communications of a large number of UEs with the network, and avoiding network congestion caused by simultaneous communications of a large number of UEs with the network when being about to leave the satellite coverage.

In the above embodiments provided in the present disclosure, the method provided in the embodiments of the present disclosure is introduced from the perspective of the first network element and the UE respectively. In order to implement the various functions in the method provided in the above embodiments of the present disclosure, the UE and the network device may include a hardware structure and a software module to implement the above functions in the form of a hardware structure, a software module, or a hardware structure plus a software module. Any of the above functions may be implemented in the form of a hardware structure, a software module, or a hardware structure plus a software module.

Corresponding to the method for controlling the communication of the UE provided in the above embodiments, the present disclosure further provides an apparatus for controlling the communication of the UE. Since the apparatus for controlling the communication of the UE provided in the embodiments of the present disclosure corresponds to the method for controlling the communication of the UE provided in the above embodiments, the implementation of the method for controlling the communication of the UE is also applicable to the apparatus for controlling the communication of the UE provided in these embodiments, which will not be described in detail in these embodiments.

FIG. 12 is a block diagram illustrating an apparatus 1200 for controlling a communication of a UE according to embodiments of the present disclosure. The apparatus 1200 for controlling the communication of the UE may be applied to a first network element.

As shown in FIG. 12, the apparatus 1200 may include: a sending module 1210 configured to send satellite coverage information to the UE and/or send communication control information to the UE. The satellite coverage information is coverage information of a satellite network in a specified area, and is configured to set a power saving parameter and a timer related to a power saving management and a mobility management. The communication control information is configured to control UEs in the same area to communicate with a network in a distributed manner within a preset time range before leaving a satellite signal coverage.

In some embodiments of the present disclosure, the sending module 1210 is further configured to send first satellite coverage information to the UE, or send second satellite coverage information to the UE. The first satellite coverage information is satellite coverage information of a satellite network currently used by the UE, or satellite coverage information of at least one available satellite network in the specified area. The second satellite coverage information is satellite coverage information of the UE at a current location, or satellite coverage information of the UE at a specified location.

In some embodiments of the present disclosure, as shown in FIG. 12, the apparatus 1200 further includes: a processing module 1220. In response to sending the first satellite coverage information to the UE, the processing module 1220 is configured to obtain the first satellite coverage information from a second network element.

In some embodiments of the present disclosure, in response to sending the second satellite coverage information to the UE, the processing module 1220 is configured to obtain the second satellite coverage information from a second network element; or obtain the first satellite coverage information from a second network element, and generate the second satellite coverage information according to the first satellite coverage information, a location of the UE and/or a moving track of the UE.

In some embodiments of the present disclosure, the sending module 1210 may be configured to transparently forward the first satellite coverage information to the UE in response to obtaining the first satellite coverage information from the second network element.

In some embodiments of the present disclosure, the sending module 1210 may be configured to transparently forward the second satellite coverage information to the UE in response to obtaining the second satellite coverage information from the second network element.

In some embodiments of the present disclosure, the sending module 1210 may be configured to send time range information to the UE, in which the time range information indicates the UE to randomly communicate with a network within the preset time range before the UE leaves the satellite signal coverage, such that the UEs in the same area communicate with the network in the distributed manner within the preset time range; or send a first timer to the UE, in which the first timer is set according to second satellite coverage information and is configured to control the UE to communicate with a network at a first timing end moment, and the first timing end moment is within the preset time range before the UE leaves the satellite signal coverage; or send a communication control indication to the UE, in which the communication control indication is configured to notify the UE using a satellite access with a discontinuous coverage to randomly communicate with a network before leaving the satellite signal coverage.

In some embodiments of the present disclosure, the processing module 1220 may be configured to determine to send the communication control information to the UE in response to determining that the discontinuous coverage exists for the satellite access used by the UE or receiving an indication that the UE supports initiating a communication according to the timer.

FIG. 13 is a block diagram illustrating an apparatus 1300 for controlling a communication of a UE according to embodiments of the present disclosure. The apparatus 1300 for controlling the communication of the UE may be applied to the UE.

As shown in FIG. 13, the apparatus 1300 may include: a receiving module 1310 configured to receive satellite coverage information sent by a first network element and/or receive communication control information sent by a first network element. The satellite coverage information is coverage information of a satellite network in a specified area, and is configured to set a power saving parameter and a timer related to a power saving management and a mobility management. The communication control information is configured to control UEs in the same area to communicate with a network in a distributed manner within a preset time range before leaving a satellite signal coverage.

In some embodiments of the present disclosure, the receiving module 1310 may be configured to receive first satellite coverage information sent by the first network element, or receive second satellite coverage information sent by the first network element. The first satellite coverage information is satellite coverage information of a satellite network currently used by the UE, or satellite coverage information of at least one available satellite network in the specified area. The second satellite coverage information is satellite coverage information of the UE at a current location, or satellite coverage information of the UE at a specified location.

In some embodiments of the present disclosure, as shown in FIG. 13, the apparatus 1300 further includes: a processing module 1320.

In response to receiving the first satellite coverage information sent by the first network element, the processing module 1320 may be configured to generate the second satellite coverage information according to the first satellite coverage information, a location of the UE and/or a moving track of the UE; and generate the power saving parameter and an NAS timer according to the second satellite coverage information.

In some embodiments of the present disclosure, in response to receiving the second satellite coverage information sent by the first network element, the processing module 1320 may be configured to generate the power saving parameter and the NAS timer according to the second satellite coverage information.

In some embodiments of the present disclosure, the receiving module 1310 may be configured to receive time range information sent by the first network element, in which the time range information indicates the UE to randomly communicate with a network within the preset time range before the UE leaves the satellite signal coverage, such that the UEs in the same area communicate with the network in the distributed manner within the preset time range; or receive a first timer sent by the first network element, in which the first timer is set according to the second satellite coverage information and is configured to control the UE to communicate with a network at a first timing end moment, and the first timing end moment is within the preset time range before the UE leaves the satellite signal coverage; or receive a communication control indication sent by the first network element, in which the communication control indication is configured to notify the UE using a satellite access with a discontinuous coverage to randomly communicate with a network before leaving the satellite signal coverage.

In some embodiments of the present disclosure, in response to receiving the time range information sent by the first network element, the processing module 1320 may be configured to set a second timer according to the time range information and the second satellite coverage information, in which the second timer is configured to control the UE to communicate with the network at a second timing end moment, and the second timing end moment is within the preset time range before the UE leaves the satellite signal coverage; or generate an unreachable period of the UE according to the time range information and the second satellite coverage information, in which the unreachable period is configured to control the UE to communicate with the network before the unreachable period starts, and a start time of the unreachable period of the UE is within the preset time range before the UE leaves the satellite signal coverage.

In some embodiments of the present disclosure, in response to receiving the communication control indication sent by the first network element, the processing module 1320 may be configured to set a second timer according to preset time range information and the second satellite coverage information, in which the second timer is configured to control the UE to communicate with the network at a second timing end moment, and the second timing end moment is within the preset time range before the UE leaves the satellite signal coverage; or generate an unreachable period of the UE according to preset time range information and the second satellite coverage information, in which the unreachable period is configured to control the UE to communicate with the network before the unreachable period starts, and a start time of the unreachable period of the UE is within the preset time range before the UE leaves the satellite signal coverage.

In some embodiments of the present disclosure, the processing module 1320 may be further configured to activate the first timer or the second timer.

In some embodiments of the present disclosure, the processing module 1320 may be further configured to communicate with the network at the first timing end moment or the second timing end moment.

In some embodiments of the present disclosure, the processing module 1320 may be further configured to communicate with the network before the unreachable period starts.

In some embodiments of the present disclosure, communicating with the network at the first timing end moment or the second timing end moment or communicating with the network before the unreachable period starts includes at least one of: sending the power saving parameter and the NAS timer to the first network element, sending the second satellite coverage information to the first network element, or sending unreachable period information of the UE to the first network element.

In some embodiments of the present disclosure, the second satellite coverage information includes at least one of: a time when the UE is within the satellite signal coverage, a duration during which the UE is within the satellite signal coverage, a time when the UE is outside the satellite signal coverage, or a duration during which the UE is outside the satellite signal coverage.

In some embodiments of the present disclosure, the power saving parameter and the NAS timer include at least one of: an eDRX parameter in a CM-IDLE state, a parameter for configuring an MICO mode, a parameter for configuring a PSM state, a timing duration of a periodic registration timer, a timing duration of a mobile reachable timer, or a timing duration of an implicit de-registration timer.

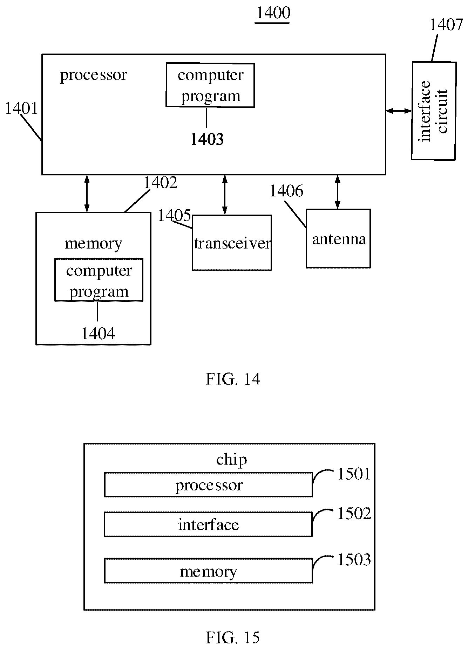

Referring to FIG. 14, FIG. 14 is a schematic block diagram illustrating a communication device according to embodiments of the present disclosure. The communication device 1400 may be a network device; a UE; a chip, a chip system or a processor supporting the network device to implement the above-mentioned method; or a chip, a chip system or a processor supporting the UE to implement the above-mentioned method. The communication device may be configured to implement the method as described in method embodiments described above. For details, reference may be made to the description in the above-mentioned method embodiments.

The communication device 1400 may include one or more processors 1401. The processor 1401 may be a general-purpose processor, a special-purpose processor, or the like. The processor 1401 may be, for example, a baseband processor or a central processor. The baseband processor may be configured to process a communication protocol and communication data, and the central processor may be configured to control a communication device (such as a base station, a baseband chip, a terminal, a terminal chip, a distributed unit DU, a central unit CU, or the like), execute a computer program, and process data of the computer program.

Optionally, the communication device 1400 may further include one or more memories 1402 on which the computer program 1404 may be stored. The processor 1401 executes the computer program 1404 to cause the communication device 1400 to perform the method as described in the above method embodiments. Optionally, the memory 1402 may also have data stored therein. The communication device 1400 and the memory 1402 may be provided independently or integrated together.

Optionally, the communication device 1400 may further include a transceiver 1405 and an antenna 1406. The transceiver 1405 may be referred to as a transceiving unit, a transceiving machine, a transceiving circuit or the like for implementing a transceiving function. The transceiver 1405 may include a receiver and a transmitter, and the receiver may be referred to as a receiving machine, a receiving circuit or the like for implementing a receiving function; and the transmitter may be referred to as a transmitting machine, a transmission circuit or the like for implementing a transmitting function.

Optionally, the communication device 1400 may further include one or more interface circuits 1407. The interface circuit 1407 is configured to receive and transmit code instructions to the processor 1401. The processor 1401 executes the code instructions to cause the communication device 1400 to perform the method described in above method embodiments.

In an implementation, the processor 1401 may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor 1401 may store the computer program 1403 that, when running on the processor 1401, enables the communication device 1400 to perform the method described in the above-mentioned method embodiments. The computer program 1403 may be embedded in the processor 1401, in which case the processor 1401 may be implemented by hardware.

In an implementation, the communication device 1400 may include a circuit that may perform the transmitting, receiving or communicating function in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, or the like. The processor and the transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), or the like.

The communication device described in the above embodiments may be a network device or a user equipment, but the scope of the communication device described in the present disclosure is not limited thereto. The structure of the communication device may not be limited by FIG. 14. The communication device may be a stand-alone device or may be part of a larger device. For example, the communication device may be: (1) a stand-alone IC, or a chip, or a chip system or subsystem; (2) a set of one or more ICs, in which optionally, the set of ICs may also include a storage component for storing data and computer programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

In the case where the communication device may be a chip or a chip system, reference may be made to the schematic block diagram of the chip shown in FIG. 15. The chip shown in FIG. 15 includes a processor 1501 and an interface 1502. The number of processors 1501 may be one or more, and the number of interfaces 1502 may be more than one.

Optionally, the chip further includes a memory 1503 for storing desired computer programs and data.

Those skilled in the art may also understand that various illustrative logical blocks and steps listed in the embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the function, but such an implementation should not be understood as extending beyond the protection scope of embodiments of the present disclosure.

The present disclosure further provides a readable storage medium having stored therein instructions that, when executed by a computer, cause functions of any one of the above method embodiments to be implemented.

The present disclosure further provides a computer program product that, when executed by a computer, causes functions of any one of the above method embodiments to be implemented.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

The present disclosure proposes a method and an apparatus for controlling a communication of a UE, which may enable the UE to maintain a power saving state during a period when a satellite coverage is left and avoid communication congestion when the satellite coverage is about to be left.

Based on the present disclosure, two specific embodiments are exemplified as follows:

### Embodiment 1

The UE according to Embodiment 1 corresponds to the user equipment, the AMF corresponds to the first network element, and the OAM corresponds to the second network element. The present embodiment describes that the AMF obtains the first satellite coverage information from the OAM, generates the second satellite coverage information according to the first satellite coverage information, generates the first timer according to the second satellite coverage information, and provides the second satellite coverage information and the first timer to the UE.

1. The UE accesses the network and completes a registration process with the 5G core network. The UE further needs to establish a protocol data unit (PDU) session with the 5GC network.

2-3. The AMF obtains the first satellite coverage information from the OAM. In this process, the AMF first provides information related to a location or an area to the OAM, and the OAM provides the first satellite coverage information related to the location or the area according to the location or area information. The first satellite coverage information is coverage information of the satellite network currently used by the UE, or coverage information of all available satellite networks in the location or area. The location may be represented by a cell identity (cell-ID), a tracking area identity (TAI), a longitude and a latitude, or the like.

4. The AMF stores the first satellite coverage information, and the AMF generates the second satellite coverage information according to the first satellite coverage information, a location of the UE and/or a moving track of the UE. The first timer is set according to the second satellite coverage information. The second satellite coverage information is satellite coverage information related to the UE, and includes at least one of: a time when the UE is within the satellite signal coverage, a duration during which the UE is within the satellite signal coverage, a time when the UE is outside the satellite signal coverage, or a duration during which the UE is outside the satellite signal coverage. The first timer is set according to the second satellite coverage information, and is configured to control the UE to communicate with the network within a specified range before leaving the satellite coverage. For example, according to the time when the UE is outside a satellite signal coverage indicated by the second satellite coverage information, the duration of the first timer is set, such that the time when the first timer expires is within a specific time range before the time when the UE is outside the satellite coverage.

5. The AMF performs encryption and integrity protection on the second satellite coverage information.

6. The AMF includes the second satellite coverage information and the first timer in an NAS message, and sends them to the RAN via a downlink NAS transport message.

7. The RAN sends the NAS message to the UE via an RRC DL message.

8. After receiving the information, the UE obtains the second satellite coverage information after performing integrity check, decryption and other processing. The second satellite coverage information and the first timer are saved, and the first timer is activated.

9. The first timer expires.

10. The UE initiates a mobile registration update request to the network, for example, for requesting a power saving parameter and an NAS timer from the network for the satellite coverage that the UE is about to leave.

### Embodiment 2

The UE according to Embodiment 2 corresponds to the user equipment, the AMF corresponds to the first network element, the SMF and the network exposure function (NEF) correspond to other network elements that assist the first network element in obtaining satellite coverage information, and the AF corresponds to the second network element.
1. The UE accesses the network and completes the registration process with the 5G core network. The UE further needs to establish the PDU session with the 5GC network.
2. The SMF establishes a connection with the corresponding NEF according to a non-IP data delivery (NIDD) indication in subscription data of the UE.
3. The NEF establishes a connection with the AF according to the AF ID or the like.
4. The UE initiates a request for the first satellite coverage information to the network, and this step is optional.
5. The SMF provides location or area information related to the UE to the AF.
6. The AF obtains the first satellite coverage information related to the location or area according to the location or area information, and provides the first satellite coverage information to the SMF via the NEF.
7. The SMF includes the first satellite coverage information in an N1N2 message transfer message, and sends it to the AMF.
8. The AMF senses that the UE uses the satellite access and determines to generate a time range. The time range information indicates that the UE communicates with the network within a time range before leaving the satellite coverage.
9. The AMF receives information, and the AMF initiates a paging to the UE and pages the UE in a case where the UE is in the idle state at this time, such that the communication between the UE and the network may be restored.
10. The AMF performs encryption and integrity protection on data received from the SMF.
11. The AMF includes the first satellite coverage information and the time range information in the NAS message, and sends them to the RAN via a downlink NAS transport message.
12. The RAN sends the NAS message to the UE via the RRC DL message.
13. In a case where the sending is successful, the AMF returns an N1N2 message transfer response to the SMF.
14. The SMF returns an NIDD delivery response to the AF via the NEF.
15. After receiving the information, the UE obtains the first satellite coverage information after performing integrity check, decryption and other processing, and saves the first satellite coverage information.
16. The UE generates the second satellite coverage information according to the first satellite coverage information, the location of the UE and/or the moving track of the UE. The unreachable period of the UE is set according to the duration during which the UE is outside the satellite signal coverage included in the second satellite coverage information and the time range information. The second satellite coverage information is satellite coverage information related to the UE, and includes at least one of: a time when the UE is within the satellite signal coverage at a specified location, a duration during which the UE is within the satellite signal coverage at a specified location, a time when the UE is outside the satellite signal coverage at a specified location, or a duration during which the UE is outside the satellite signal coverage at a specified location. For example, the time and the duration during which the UE is outside the satellite coverage indicated by the second satellite coverage information are 2:00 to 3:00, and the time range information is 5 minutes. Based on this, the unreachable period of the UE is set to 1:55 to 3:00.
17. At the beginning of the unreachable period of the UE, the UE initiates a mobile registration update request to the network to provide the network with the unreachable period of the UE before the UE is about to leave the satellite coverage, so as to request the network to provide the power saving parameter and the NAS timer according to the unreachable period of the UE.

In summary, the present disclosure has the following beneficial technical effects. The satellite coverage information may be sent to the UE via the first network element, such that the UE makes a behavior decision according to the satellite coverage information, for example, maintaining a power saving state, thereby avoiding unreasonable consumption of a resource of the UE. The communication control information may be further sent to the UE via the first network element, and the communication control information may be configured to control the UEs in the same area to randomly communicate with the network within the preset time range before leaving the satellite signal coverage, thereby distributing communications of a large number of UEs with the network, and avoiding network congestion caused by simultaneous communications of a large number of UEs with the network when being about to leave the satellite coverage.

Those of ordinary skill in the art may understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In the embodiments of the present disclosure, for a certain kind of technical features, the technical features in this kind of technical features are distinguished by terms like "first", "second", "third", "A", "B", "C", "D", etc., and these technical features described with the terms "first", "second", "third", "A", "B", "C" and "D" have no order of precedence or size.

As used herein, the terms "machine readable medium" and "computer readable medium" refer to any computer program product, device, and/or apparatus (e.g., a magnetic disk, an optical disk, a memory, a programmable logic device PLD) for providing machine instructions and/or data to a programmable processor, including a machine readable medium that receives machine instructions as a machine readable signal. The term "machine readable signal" refers to any signal configured to provide the machine instructions and/or data to the programmable processor.

The systems and technologies described herein may be implemented in a computing system (e.g., as a data server) including a background component, a computing system (e.g., an application server) including a middleware component, a computing system including a front-end component (e.g., a user computer having a graphical user interface or a web browser, through which the user may interact with embodiments of the systems and technologies described herein), or a computing system including any combination of such a background component, such a middleware component, or such a front-end component. Components of the system may be connected to each other by digital data communication (such as a communication network) in any form or medium. Examples of the communication network include a local area network (LAN), a wide area network (WAN), and the Internet.

The computer system may include a client and a server. The client and the server are generally remote from each other and typically interact with each other via the communication network. A client-server relationship is generated by computer programs operating on corresponding computers and having the client-server relationship with each other.

It should be understood that steps may be reordered, added or deleted using various forms of processes illustrated above. For example, steps described in the present disclosure may be executed in parallel, sequentially or in different orders, so long as a desired result of the technical solution disclosed in the present disclosure may be achieved, which is not limited here.

Furthermore, it should be understood that various embodiments of the present disclosure may be implemented alone or in combination with other embodiments, as the solution allows.

Those skilled in the art may appreciate that units and algorithm steps of each example described in conjunction with the embodiments disclosed herein may be implemented with the electronic hardware, or combinations of the computer software and the electronic hardware. Whether such a functionality is implemented in hardware or software depends on the specific application and design constraints of the technical solution. Those skilled in the art may implement the described functionality in varying ways for each particular application, but such an implementation should not be considered as extending beyond the scope of the present disclosure.

It will be clear to those skilled in the art that for convenience and brevity of the description, regarding specific working procedures of the above described systems, devices and units, reference may be made to corresponding procedures in the preceding method embodiments, which will not be described in detail here.

The above description is only for the specific embodiments of the present disclosure, but the scope of the present disclosure is not limited thereto. Any person skilled in the art may easily think of changes or substitutions within the technical scope of the present disclosure, which shall be covered by the protection scope of the present disclosure. Therefore, the protection scope of the present disclosure shall be in line with the attached claims.

## Claims

1. A method for controlling a communication of a user equipment (UE), performed by a first network element, comprising:
sending satellite coverage information to the UE and/or sending communication control information to the UE,
wherein the satellite coverage information is coverage information of a satellite network in a specified area, and is configured to set a power saving parameter and a timer related to a power saving management and a mobility management; and
the communication control information is configured to control UEs in the same area to communicate with a network in a distributed manner within a preset time range before leaving a satellite signal coverage.

2. The method of claim 1, wherein sending the satellite coverage information to the UE comprises:
sending first satellite coverage information to the UE or sending second satellite coverage information to the UE,
wherein the first satellite coverage information is satellite coverage information of a satellite network currently used by the UE, or satellite coverage information of at least one available satellite network in the specified area; and
the second satellite coverage information is satellite coverage information of the UE at a current location, or satellite coverage information of the UE at a specified location.

3. The method of claim 2, wherein, in response to sending the first satellite coverage information to the UE, the method further comprises:
obtaining the first satellite coverage information from a second network element.

4. The method of claim 2, wherein, in response to sending the second satellite coverage information to the UE, the method further comprises:
obtaining the second satellite coverage information from a second network element; or
obtaining the first satellite coverage information from a second network element, and generating the second satellite coverage information according to the first satellite coverage information, a location of the UE and/or a moving track of the UE.

5. The method of claim 2 or 3, wherein sending the first satellite coverage information to the UE comprises:
transparently transmitting the first satellite coverage information to the UE in response to obtaining the first satellite coverage information from the second network element.

6. The method of claim 2 or 4, wherein sending the second satellite coverage information to the UE comprises:
transparently transmitting the second satellite coverage information to the UE in response to obtaining the second satellite coverage information from the second network element.

7. The method of claim 1, wherein sending the communication control information to the UE comprises:
sending time range information to the UE, wherein the time range information indicates the UE to randomly communicate with a network within the preset time range before the UE leaves the satellite signal coverage, such that the UEs in the same area communicate with the network in the distributed manner within the preset time range; or
sending a first timer to the UE, wherein the first timer is set according to second satellite coverage information and is configured to control the UE to communicate with a network at a first timing end moment, and the first timing end moment is within the preset time range before the UE leaves the satellite signal coverage; or
sending a communication control indication to the UE, wherein the communication control indication is configured to notify the UE using a satellite access with a discontinuous coverage to randomly communicate with a network before leaving a signal coverage.

8. The method of claim 7, before sending the communication control information to the UE, comprising:
determining to send the communication control information to the UE in response to determining that the discontinuous coverage exists for the satellite access used by the UE or receiving an indication that the UE supports initiating a communication according to the timer.

9. A method for controlling a communication of a user equipment (UE), performed by the UE, comprising:
receiving satellite coverage information sent by a first network element and/or receiving communication control information sent by a first network element,
wherein the satellite coverage information is coverage information of a satellite network in a specified area, and is configured to set a power saving parameter and a timer related to a power saving management and a mobility management; and
the communication control information is configured to control UEs in the same area to communicate with a network in a distributed manner within a preset time range before leaving a satellite signal coverage.

10. The method of claim 9, wherein receiving the satellite coverage information sent by the first network element comprises:
receiving first satellite coverage information sent by the first network element or receiving second satellite coverage information sent by the first network element,
wherein the first satellite coverage information is satellite coverage information of a satellite network currently used by the UE, or satellite coverage information of at least one available satellite network in the specified area; and
the second satellite coverage information is satellite coverage information of the UE at a current location, or satellite coverage information of the UE at a specified location.

11. The method of claim 10, wherein, in response to receiving the first satellite coverage information sent by the first network element, the method further comprises:
generating the second satellite coverage information according to the first satellite coverage information, a location of the UE and/or a moving track of the UE; and
generating the power saving parameter and a non-access stratum (NAS) timer according to the second satellite coverage information.

12. The method of claim 10, wherein, in response to receiving the second satellite coverage information sent by the first network element, the method further comprises:
generating the power saving parameter and an NAS timer according to the second satellite coverage information.

13. The method of claim 9, wherein receiving the communication control information sent by the first network element comprises:
receiving time range information sent by the first network element, wherein the time range information indicates the UE to randomly communicate with a network within the preset time range before the UE leaves the satellite signal coverage, such that the UEs in the same area communicate with the network in the distributed manner within the preset time range; or
receiving a first timer sent by the first network element, wherein the first timer is set according to the second satellite coverage information and is configured to control the UE to communicate with a network at a first timing end moment, and the first timing end moment is within the preset time range before the UE leaves the satellite signal coverage; or
receiving a communication control indication sent by the first network element, wherein the communication control indication is configured to notify the UE using a satellite access with a discontinuous coverage to randomly communicate with a network before leaving a signal coverage.

14. The method of claim 13, wherein, in response to receiving the time range information sent by the first network element, the method further comprises:
setting a second timer according to the time range information and the second satellite coverage information, wherein the second timer is configured to control the UE to communicate with the network at a second timing end moment, and the second timing end moment is within the preset time range before the UE leaves the satellite signal coverage; or
generating an unreachable period of the UE according to the time range information and the second satellite coverage information, wherein the unreachable period is configured to control the UE to communicate with the network before the unreachable period starts, and a start time of the unreachable period of the UE is within the preset time range before the UE leaves the satellite signal coverage.

15. The method of claim 13, in response to receiving the communication control indication sent by the first network element, further comprising:
setting a second timer according to preset time range information and the second satellite coverage information, wherein the second timer is configured to control the UE to communicate with the network at a second timing end moment, and the second timing end moment is within the preset time range before the UE leaves the satellite signal coverage; or
generating an unreachable period of the UE according to preset time range information and the second satellite coverage information, wherein the unreachable period is configured to control the UE to communicate with the network before the unreachable period starts, and a start time of the unreachable period of the UE is within the preset time range before the UE leaves the satellite signal coverage.

16. The method of any one of claims 14 to 15, further comprising:
activating the first timer or the second timer.

17. The method of any one of claims 14 to 15, further comprising:
communicating with the network at the first timing end moment or the second timing end moment.

18. The method of any one of claims 14 to 15, further comprising:
communicating with the network before the unreachable period starts.

19. The method of claim 17 or 18, wherein communicating with the network at the first timing end moment or the second timing end moment or communicating with the network before the unreachable period starts comprises at least one of:
sending the power saving parameter and a non-access stratum (NAS) timer to the first network element;
sending the second satellite coverage information to the first network element; or
sending unreachable period information of the UE to the first network element.

20. The method of claim 10, wherein the second satellite coverage information comprises at least one of:
a time when the UE is within the satellite signal coverage;
a duration during which the UE is within the satellite signal coverage;
a time when the UE is outside the satellite signal coverage; or
a duration during which the UE is outside the satellite signal coverage.

21. The method of any one of claims 11 to 12, wherein the power saving parameter and the NAS timer comprise at least one of:
an extended discontinuous reception (eDRX) parameter in a connection management idle (CM-IDLE) state;
a parameter for configuring a mobile initiated connection only (MICO) mode;
a parameter for configuring a power saving mode (PSM) state;
a timing duration of a periodic registration timer;
a timing duration of a mobile reachable timer; or
a timing duration of an implicit de-registration timer.

22. An apparatus for controlling a communication of a user equipment (UE), performed by a first network element, comprising:
a sending module configured to send satellite coverage information to the UE and/or sending communication control information to the UE,
wherein the satellite coverage information is coverage information of a satellite network in a specified area, and is configured to set a power saving parameter and a timer related to a power saving management and a mobility management; and
the communication control information is configured to control UEs in the same area to communicate with a network in a distributed manner within a preset time range before leaving a satellite signal coverage.

23. An apparatus for controlling a communication of a user equipment (UE), performed by the UE, comprising:
a receiving module configured to receive satellite coverage information sent by a first network element and/or receiving communication control information sent by the first network element,
wherein the satellite coverage information is coverage information of a satellite network in a specified area, and is configured to set a power saving parameter and a timer related to a power saving management and a mobility management; and
the communication control information is configured to control UEs in the same area to communicate with a network in a distributed manner within a preset time range before leaving a satellite signal coverage.

24. A communication device, comprising:
a transceiver;
a memory; and
a processor connected to the transceiver and the memory respectively, and configured to control wireless signal reception and transmission of the transceiver and implement the method of any one of claims 1 to 21 by executing computer executable instructions on the memory.

25. A computer storage medium having stored therein computer executable instructions that, after executed by a processor, cause the method of any one of claims 1 to 21 to be implemented.

26. A communication system, comprising:
a first network element configured to perform the method of any one of claims 1 to 9;
a second network element; and
a user equipment (UE) configured to perform the method of any one of claims 10 to 21.
